# EUROPEAN PATENT SPECIFICATION

(11) **EP 4 513 746 B1**
(45) Date of publication and mention of the grant of the patent: **27.08.2025**
(21) Application number: 24195387.6
(22) Date of filing: 20.08.2024
(51) Int. Cl.: H02S 20/24, E04D 13/16, F24S 25/00

(54) **PHOTOVOLTAIC ARRANGEMENT AND USE OF A FIRE PROTECTION FILM**
PHOTOVOLTAIKANORDNUNG UND VERWENDUNG EINER BRANDSCHUTZFOLIE
AGENCEMENT PHOTOVOLTAÏQUE ET UTILISATION D'UN FILM DE PROTECTION CONTRE LE FEU

(30) Priority: 21.08.2023 DE 202023104750 U
(43) Date of publication of application: 26.02.2025
(73) Proprietor: Saint-Gobain Adfors, 92400 Courbevoie (FR); Sonnen Stark GmbH, 48432 Rheine (DE)
(72) Inventor: Kuhlmann, Bastian, 49078 Osnabrück (DE)
(74) Representative: Von Rohr Patentanwälte Partnerschaft mbB

(56) References cited:
- CN-A- 103 410 279
- JP-A- 2012 132 213
- US-A1- 2012 011 784
- US-A1- 2012 110 931
- US-A1- 2023 126 558

## Description

The present invention relates to a photovoltaic arrangement and to a use of a fire protection film as a fire protection layer.

DE 10 2021 124 625 A1 discloses a photovoltaic mounting system with which photovoltaic modules can be mounted on a roof. Such photovoltaic mounting systems can be effectively installed on flat roofs. However, the photovoltaic modules, connectors, junction boxes and inverters pose a certain fire risk and problems can arise due to electrical malfunctions, material defects or other environmental influences or damage by animals. Due to the fire risk, roof structures with photovoltaic modules can only be insured with a risk surcharge and may only be installed on ground made of certain materials.

US 2023/0126558 A1 relates to photovoltaic modules for commercial roofing and discloses a photovoltaic module including a head flap located at a first end of the photovoltaic module and a bottom flap located at a second end of the photovoltaic module. A free end of the head flap is bent and folded relative to itself such that it forms a rounded end. The rounded end includes a first portion juxtaposed with a roofing membrane and a second portion that is distal from the roofing membrane.

JP 2012132213 A relates to a roof waterproof structure capable of effectively preventing fire spread due to leaping flames, without impairing long-life reliability or productivity. The waterproof roof structure includes a plurality of heat insulating materials laid on the upper surface of a housing such as a roof or a rooftop via a predetermined gap, and glass fibers as non-combustible fibers laid on the upper surfaces of the plurality of heat insulating materials.

US 2012/0011784 A1 relates to photovoltaic roofing products in which a photovoltaic element is affixed to a roofing substrate. It is disclosed that bituminous roofing products are typically manufactured in continuous processes in which a continuous substrate sheet of a fibrous material such as a continuous felt sheet or glass fiber mat is immersed in a bath of hot, fluid bituminous coating material so that the bituminous material saturates the substrate sheet and coats at least one side of the substrate.

US 2012/0110931 A1 relates to a photovoltaic module for use on the roof of a building, comprising an isolation mount, including a wedge shaped hollow shell having an upper sloped surface and at least three sidewalls extending therefrom to join a surrounding flange; and a skirt membrane having an inner perimeter portion secured to the surrounding flange and an outer perimeter portion extending away from the surrounding flange; and at least one photovoltaic cell secured to the isolation mount.

It is therefore an object of the present invention to provide a solution in which a wide range of possible uses of a photovoltaic system is achieved and/or the risk of damage due to fire is reduced.

This object is solved with a photovoltaic arrangement according to claim 1 and the use of a fire protection film according to claim 11. Advantageous further embodiments are the subject of the subclaims.

The photovoltaic arrangement according to the invention comprises a substructure for fixing at least one photovoltaic module. The photovoltaic arrangement also comprises a fire protection film with a layer of glass fiber fabric. The substructure is arranged, set up and/or supported on the fire protection film.

Due to the arrangement of the fire protection film under the substructure for fixing a photovoltaic module, the area under the fire protection film is protected by it, in particular the glass fiber fabric. In particular, the fire protection film protects against the spread of fire and/or against ignition of an object located under the fire protection film, for example in the event of a fire in a photovoltaic module. In this way, the fire protection film also protects against falling hot objects that initially only fall onto the fire protection film with the layer of glass fiber fabric, whereby ignition of the area under the fire protection film and/or spread of the fire to the area under the fire protection film can be prevented or delayed. The mechanical strength of the glass fiber fabric can prevent the fire protection film from being penetrated and/or damaged by falling objects and the fire from spreading further in this way. This improvement in fire protection makes it possible to install photovoltaic systems in positions and/or locations that would otherwise not be permitted for fire protection reasons.

In a preferred embodiment, the fire protection film comprises a second layer made of plastic and/or aluminum. The second layer is designed in particular to protect the layer of glass fiber fabric from the effects of the weather. The layer of glass fiber fabric can be effectively protected from environmental influences by the second layer.

The second layer is preferably arranged between the layer of glass fiber fabric and the substructure. In this way, the glass fiber fabric can be protected from UV radiation and other environmental and weather influences by the second layer, whereby the service life of the fire protection film can be extended.

In particular, the second layer is formed by an elastomer. Silicone can be used as elastomer. The thermal properties and/or thermal stress properties of silicone are advantageously similar to the properties of the layer of glass fiber fabric, which can prevent and/or delay weather-related and/or heat-related damage to the second layer and/or the first layer. The service life of the fire protection film can be extended in this way.

Preferably, the silicone used is solvent-free. The silicone then preferably comprises no substances that are harmful to health, whereby production can be facilitated. In particular, no solvents are released during production that could pose a health risk to workers. In comparison to solvent-based silicone, fewer occupational safety measures are required, whereby manufacturing costs can be reduced. In addition, solvents in the silicone can attack the substructure and/or an object arranged under the fire protection film and/or diffuse into it and/or lead to unwanted reactions, which can be prevented by using a solvent-free silicone.

Silicone preferably comprises no plasticizers, whereby the diffusion of plasticizers into the area under the fire protection film and/or into the substructure is prevented. In this way, a negative impact from plasticizers can be effectively prevented.

In a preferred embodiment, the fire protection film comprises a third layer, wherein the layer of glass fiber fabric is arranged between the second and the third layer. The third layer may comprise plastic and/or aluminum. In particular, the third layer can be formed from an elastomer, preferably a silicone, in particular a solvent-free silicone.

The third layer can be configured identically to the second layer. The third layer can provide further protection of the glass fiber fabric against environmental and/or weather conditions. In addition, the third layer can form a mechanical, physical and/or chemical protective layer for the layer of glass fiber fabric on the side of the layer of glass fiber fabric facing away from the substructure.

In a further preferred embodiment, the glass fiber fabric and/or the layer of glass fiber fabric comprises a thickness of more than 0.1 mm, preferably more than 0.2 mm, further preferably more than 0.25 mm, and/or of less than 1.5 mm, preferably less than 1.0 mm, further preferably less than 0.95 mm, and/or of 0.3 mm to 0.9 mm. Corresponding thicknesses provide good protection against the spread of fire, offer particularly good mechanical strength and are also easy to handle due to their low thickness, particularly when installing the fire protection film.

The glass fiber fabric and/or the layer of glass fiber fabric can comprise a basis weight of more than 50 g/m², preferably more than 60 g/m² , more preferably more than 80 g/m², and/or less than 900 g/m², preferably less than 800 g/m², more preferably less than 700 g/m², and/or from 100 g/m² to 660 g/m² and/or from 100 g/m² to 600 g/m². The fire protection film then comprises a low weight combined with particularly high fire protection properties. Due to the low weight, the fire protection film can be installed particularly easily and quickly. The fire protection film is also suitable for roofs with only a limited lead-bearing capacity.

The photovoltaic system preferably comprises a ground on which the substructure is arranged. The fire protection film is preferably arranged between the substructure and the ground. The third layer is then preferably assigned to or facing the ground. In particular, the fire protection film is directly arranged on the ground.

In a further preferred embodiment, the fire protection film is bonded, in particular glued, to the ground by means of an adhesive, in particular a silicone-based adhesive. In this way, a particularly stable connection between the substructure and the fire protection film can be achieved. Preferably, the fire protection film is directly bonded, in particular glued, to the ground.

A correspondingly configured silicone-based adhesive forms a sufficiently strong and/or stable bond with the ground, for example a roof or a roof structure and/or a roof construction comprising bitumen, metal, TPO (thermoplastic polyolefin), FPO (flexible polyolefins) and/or PVC (polyvinyl chloride), so that a good connection to common roofs, roof structures and/or roof constructions can be achieved.

The fire protection film can be spot-bonded to the ground. In this way, particularly little adhesive is required to create a sufficiently strong bond, whereby the costs and time required to install the fire protection film can be reduced. Additionally, the spot bonding accounts for high thermal expansion coefficient of the roofs.

In particular, the fire protection film can be bonded to the ground with a pattern of adhesive dots. In particular, the pattern can have rows and columns. The adhesive dots configured in this way, in particular along the columns and/or rows, can be spaced less than 1 m, preferably less than 0.75 m, more preferably less than 0.6 m, and/or more than 0.2 m, preferably more than 0.3 m, more preferably more than 0.4 m, and/or at least substantially 0.5 m apart.

The ground can be formed by a roof, a roof structure or a roof construction of a building, in particular a flat roof and/or a saddle roof with an inclination of less than 20 °, preferably less than 15 °, more preferably less than 10 °, and/or between 0 ° and 8 ° and/or at least substantially 8 °. For example, the ground can be formed by the roof, the roof structure or a roof construction of a residential building, a factory building, a hall, a stable or the like. However, the ground can also be formed by a foundation or the like. The ground may comprise or be formed by a liquid-tight film, in particular made of plastic, preferably of a roof, a roof structure or a roof construction.

According to a further aspect, which can also be realized independently, the present invention relates to a use of a fire protection film with a layer of a glass fiber fabric as a fire protection layer, on which a substructure for fixing at least one photovoltaic module is arranged, set up and/or supported.

In this respect, reference may be made to all explanations on the proposed photovoltaic arrangement and the fire protection film. In particular, identical or comparable advantages can be achieved.

The above-mentioned aspects and features of the present invention and the aspects and features of the present invention resulting from the further description can be realized independently of one another, but also in any combination.

Further advantages, features, properties and aspects of the present invention are apparent from the claims and the following description of preferred embodiments with reference to the drawing. It shows:
- Fig. 1: a schematic side view of a proposed photovoltaic arrangement;
- Fig. 2: a schematic cross-sectional view of a fire protection foil of the photovoltaic arrangement;
- Fig. 3: a schematic cross-sectional view of a fire protection film of the photovoltaic arrangement according to a further embodiment; and
- Fig. 4: a schematic view of a roof structure with a photovoltaic arrangement.

In the figures, the same reference symbols are used for identical or similar parts, wherein corresponding properties and advantages can be achieved, even if a repeated description is omitted for reasons of simplification.

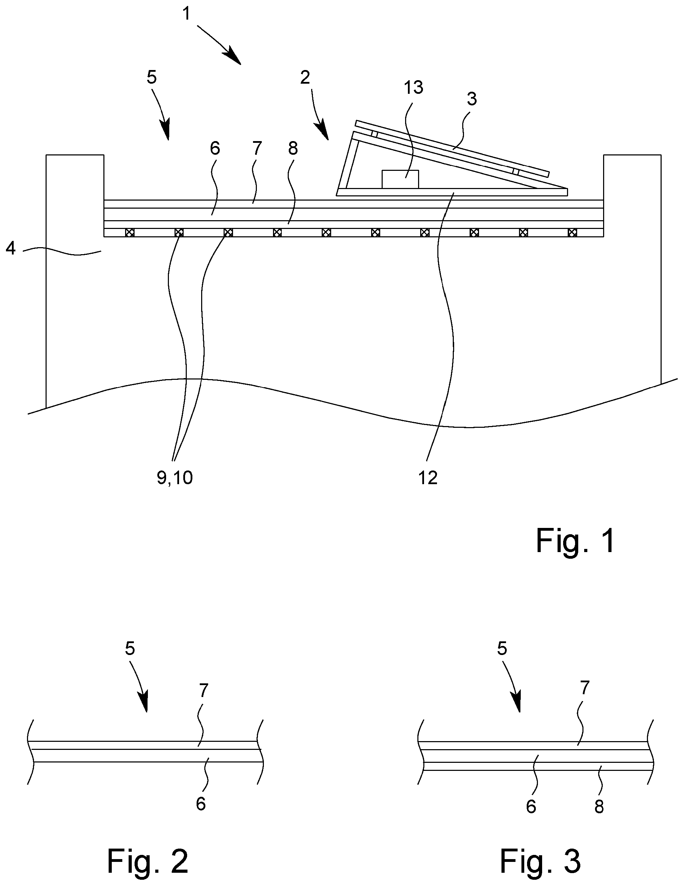

Fig. 1 shows a schematic side view of a photovoltaic arrangement 1 according to the invention. In the exemplary embodiment, the photovoltaic arrangement 1 comprises a substructure 2 for fixing at least one photovoltaic module 3.

Furthermore, the photovoltaic arrangement 1 preferably comprises a ground 4. The substructure 2 is preferably arranged and/ or set up on the ground 4, as Fig. 1 shows.

In the preferred embodiment shown in Fig. 1, the ground 4 is formed by a roof of a building. The roof may be a pitched roof with an inclination of less than 25 %, preferably less than 15 °, more preferably less than 10 °, and/or between 0 ° and 8 ° and/or at least substantially 8 °. In Fig. 1, the ground 4 is formed by a flat roof. The ground 4 can comprise or be formed by a liquid-tight film 18, in particular made of plastic.

The substructure 2 is preferably configured triangularly in the longitudinal section shown in Fig. 1, whereby the photovoltaic module 3 is arranged and/or aligned at an angle, in particular an acute angle, to the horizontal and/or to the ground 4.

In the context of the present invention, the term "acute angle" means an angle of less than 90 °, preferably less than 60 °, more preferably less than 45 °, more preferably of less than 30 °, more preferably of less than 20 °.

As Fig. 1 also shows, the photovoltaic arrangement 1 comprises a fire protection mat and/or fire protection film 5. The substructure 2 is preferably arranged and/or supported on the fire protection film 5, in particular directly.

Fig. 2 shows a first embodiment of the fire protection film 5.

The fire protection film 5 preferably comprises a layer 6 made of a glass fiber fabric.

The glass fiber fabric is preferably configured as a woven fabric.

The glass fiber fabric may comprise a thickness of more than 0.1 mm, preferably of more than 0.2 mm, more preferably of more than 0.25 mm, and/or of less than 1.5 mm, preferably of less than 1.0 mm, more preferably of less than 0.95 mm. Preferably, the glass fiber fabric has a thickness of 0.3 mm to 0.9 mm and/or 0.1 mm to 1 mm. Corresponding thicknesses comprise a particularly good ratio between the achievable fire protection on the one hand and the costs, weight and manageability of the glass fiber fabric and thus of the fire protection film 5.

In particular, the glass fiber fabric comprises a basis weight of more than 50 g/m², preferably more than 60 g/m², more preferably more than 80 g/m², and/or of less than 900 g/m², preferably less than 800 g/m², more preferably less than 700 g/m². Particularly preferably, the glass fiber fabric comprises a basis weight of 100 g/m² to 660 g/m² and/or of 100 g/m² to 600 g/m², in particular of 200 g/m² to 50 g/m². With the aforementioned basis weights, particularly good fire protection properties can be achieved, wherein the costs and the weight of the glass fiber fabric and thus of the fire protection film 5 can be kept low overall.

The glass fiber fabric is preferably embedded in a binder, especially a binder made of plastic. Layer 6 thus preferably comprises the glass fiber fabric and the binder.

Layer 6 made of glass fiber fabric can be classified as flame-retardant according to class B in accordance with standard EN 13501-1:2019-05. According to this standard, layer 6 can comprise low smoke development in accordance with class S1. Layer 6 can also be classified in class d0 according to the above standard, according to which there is no burning droplet or fall-off within 600 s in the event of a fire. Layer 6 therefore represents a particularly good fire protection barrier between a fire in the area of the substructure 2 and the ground 4.

Further preferably, the layer 6 can preferably be designed as non-combustible according to class A in accordance with standard EN 13501-1:2019-05. According to this standard, layer 6 can comprise low smoke development in accordance with class S1. Layer 6 can also be classified as class d0 according to the above-mentioned standard. Layer 6 then comprises the best possible category of a fire class, whereby optimum fire protection properties are achieved.

The layer 6 and/or the glass fiber fabric is preferably temperature resistant up to at least 450 °C, further preferably at least 500 °C, further preferably at least 550 °C and/or at least 600 °C, whereby a high resistance to the effects of heat is achieved. In the present case, the term "temperature resistance" is preferably understood to mean the upper temperature limit at which the temperature-dependent properties of the material change significantly and/or the use of the material is no longer sensible from a mechanical point of view.

The layer 6 and/or the glass fiber fabric comprises have a softening temperature and/or a glass transition temperature of at least substantially 840 °C to 850 °C. The softening temperature defines the temperature at which a material changes from a hard/glass-like state to a soft, leather-like, liquid and/or rubbery flexible state. The softening temperature and/or glass transition temperature is therefore directly related to the strength and possible uses of a material in a specific end application.

The binder of layer 6 made of glass fiber fabric can have a temperature resistance of more than -50 °C and/or up to 200 ° and/or more than 200 °C, preferably up to or more than 250 °C.

The fire protection film 5 preferably comprises a second layer 7 made of plastic and/or aluminum, as Fig. 1 and Fig. 2 show by way of example. The second layer 7 is preferably directly connected to the first layer 6. In particular, the second layer 7 can be laminated, coated and/or extruded onto the first layer 6.

A second layer 7 made of aluminum can protect the glass fiber fabric from UV radiation and other weather influences as well as mechanical stresses in a particularly reliable manner.

In a particularly preferred embodiment, the second layer 7 is made of plastic. Plastic also offers good protection for the glass fiber fabric against UV radiation and other weather and climatic influences as well as mechanical loads. For example, the second layer 7 can consist of polyurethane.

The second layer 7 is particularly preferably made of an elastomer. The second layer 7 can be made of silicone. Preferably, the silicone is solvent-free. Particularly preferably, the second layer 7 is formed at least essentially exclusively from silicone. Silicone has the advantage over many other plastics that silicone inhibits and/or prevents the formation of red algae, whereby a particularly long service life of the fire protection film 5 can be achieved.

The second layer 7 and/or the silicone preferably comprises a temperature resistance of more than -50 °C and/or up to 200 °C, preferably up to 250 °C.

In particular, silicone comprises no or only low stress corrosion. In addition, silicone can prevent and/or inhibit the formation and/or accumulation of red algae in the area of the fire protection film 5, whereby a particularly long service life of the fire protection film 5 can be achieved.

As Fig. 1 shows, the fire protection film 5 is preferably arranged between the ground 4 and the substructure 2. This arrangement allows the ground 4 to be protected by the fire protection film 5 in a particularly effective manner in the event of a fire. If the photovoltaic system, for example a photovoltaic element 3, catches fire, the fire protection film 5 can prevent and/or delay the spread of the fire to the ground 4. The fire protection film 5 can also protect the ground 4 from falling, burning parts.

Preferably, the layer 6 is assigned to the ground 4 and the second layer 7 to the substructure 2, as shown in Fig. 1. In this way, the second layer 7 can protect the layer 6 from environmental and/or weather influences.

Fig. 3 shows a second embodiment of the fire protection film 5. The second embodiment differs from the embodiment shown in Fig. 2 in that the fire protection film 5 comprises a third layer 8.

In particular, the layer 6 of glass fiber fabric is arranged between the second layer 7 and the third layer 8, as shown in Fig. 3.

In particular, the third layer 8 comprises plastic and/or aluminum.

The third layer 8 is preferably directly connected to the layer 6 of glass fiber fabric. In particular, the third layer 8 can be laminated, coated and/or extruded onto the layer 6.

The third layer 8 can protect the layer 6 and/or the glass fiber fabric in a particularly reliable manner against mechanical and/or chemical stresses from the ground 4. In addition, the third layer 8 can achieve a particularly stable connection with the ground 4, as will be explained below.

In a particularly preferred embodiment, the third layer 8 is made of plastic. Plastic also offers good protection for the glass fiber fabric. For example, the third layer 8 can consist of polyurethane.

The third layer 8 is particularly preferably made of an elastomer. The third layer 8 can be made of silicone. Preferably, the silicone is solvent-free. Particularly preferably, the third layer 8 is formed at least essentially exclusively from silicone.

The third layer 8 and/or the silicone preferably comprises a temperature resistance of more than -50 °C and/or up to 200 °C, preferably up to 250 °C.

In particular, the third layer 8 can be designed identically to the second layer 7. However, it is also possible for the third layer 8 to be configured differently from the second layer 7. For example, the third layer 8 may comprise a different thickness and/or a different material.

In a particularly preferred embodiment, the fire protection film 5 comprises the layer 6 made of glass fiber fabric, the second layer 7 made of silicone and the third layer 8 made of silicone.

In the embodiment shown in Fig. 3, the third layer 8 is configured identical to the second layer 7.

The fire protection film 5 is preferably bonded to the ground 4 by means of an adhesive 9, as shown in Fig. 1. Preferably, the adhesive 9 is silicone-based. A silicone-based adhesive 9 is particularly suitable for bonding silicone, in Fig. 1 the third layer 8 formed from silicone.

The adhesive 9 is preferably formed from a neutral-curing silicone. No acidic or alkaline substances are released during curing in neutral-curing silicones, which is why neutral-curing silicones do not comprise any odor development. For example, acetate-curing silicones evaporate acetic acid during curing, which can lead to corrosion and ageing effects. Neutral-curing silicones therefore offer a particularly wide range of applications.

The fire protection film 5 is preferably bonded at least at points to the ground 4, as shown in Fig. 1. The fire protection film 5 can be bonded to the ground 4 with a pattern consisting of adhesive dots 10. In particular, the pattern can be formed from rows and columns, wherein the adhesive dots 10 of the pattern, in particular along a row and/or column, are spaced less than 1 m, preferably less than 0.75 m, more preferably less than 0.6 m, and/or more than 0.2 m, preferably more than 0.3 m, more preferably more than 0.4 m, and/or at least substantially 0.5 m apart.

Alternatively, the adhesive dots 10 can also comprise a different, uniform or nonuniform, pattern. The adhesive dots 10 are then preferably less than 1 m, preferably less than 0.75 m, more preferably less than 0.6 m, and/or more than 0.2 m, preferably more than 0.3 m, more preferably more than 0.4 m, and/or at least substantially 0.5 m apart.

It is also possible for the fire protection film 5 to be fully bonded and/or glued to the ground 4 using the adhesive 9.

The adhesive 9 can ensure that the fire protection film 5 is securely attached to the ground 4, in particular if the ground 4 is elevated and/or subject to strong wind and/or other loads.

As Fig. 1 also shows, the substructure 2, in particular a lower strut 12, can be weighed down by means of a weight 13. The substructure 2 can then simply be arranged or set up on the fire protection film 5 and/or the ground 4. No fastening means are then required for fastening the substructure 2, which engage in the fire protection film 5 and/or the ground 4. In this way, the substructure 2 can be securely supported even under high wind loads.

Furthermore, the use of a fire protection film 5 with a layer 6 of a glass fiber fabric as a fire protection layer, on which a substructure 2 for fixing at least one photovoltaic module 3 is arranged, set up and/or supported, is provided.

Reference may be made in this respect to all explanations of photovoltaic arrangement 1 and the fire protection film 5.

The fire protection film 5 is particularly easy to handle due to its low thickness and low weight.

The fire protection film 5 can be applied and/or bonded to the ground 4 in a particularly simple manner, in particular on the ground 4. For example, a rolled-up fire protection film 5 can be used and unrolled on the ground 4, whereby particularly easy placement and/or arrangement on the ground 4 is achieved.

In particular, the fire protection film 5 can be successively bonded to the ground 4. For example, the silicone-based adhesive 9 can be successively applied to the ground 4 over the entire surface or in sections, in particular at specific spots. The fire protection film 5 can be arranged on the adhesive 9 and/or unrolled from a roll.

Once the fire protection film 5 has been applied, the substructure 2 can be set up and/or supported and/or arranged on the fire protection film 5 in a particularly simple manner.

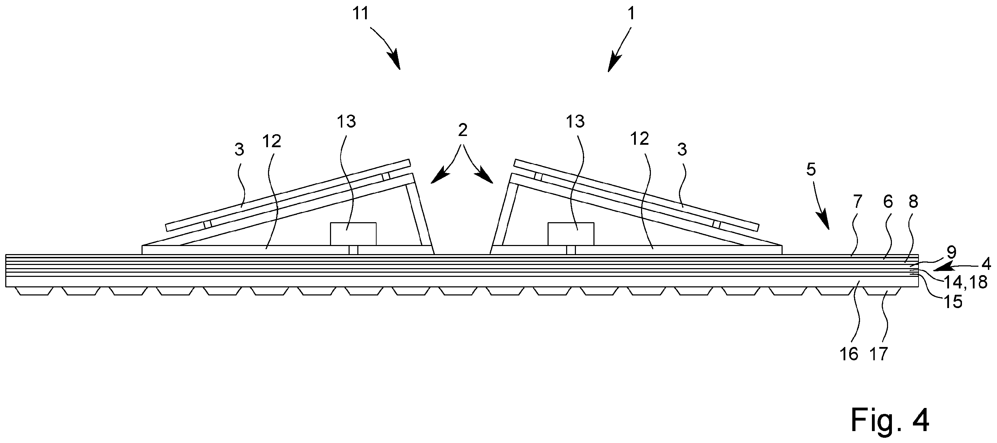

Fig. 4 shows an exemplary embodiment of a roof structure 11, in particular a flat roof of a building, with a proposed photovoltaic arrangement 1.

The roof structure 11 comprises a photovoltaic system with photovoltaic modules 3, which are fixed to the substructure 2. The substructure 2 is preferably configured with a triangular cross-section so that the photovoltaic modules 3 are aligned at an angle to the horizontal, depending on the solar radiation. A lower strut 12 of the substructure 2 is weighted down by a weight 13, in particular by stones or a concrete slab, so that the substructure 2 can be arranged loosely on the ground 4, in Fig. 4 the roof structure, and lifting due to wind loads is prevented.

The roof structure 11 or the ground 4 can comprise a liquid-tight film 18 made of plastic or the ground 4 can be formed by the liquid-tight film 18 made of plastic.

The fire protection film 5 is arranged directly below the substructure 2. In particular, the fire protection film 5 is arranged over the entire surface below the substructure 2, whereby particularly good fire protection is achieved. The layer 6 comprises the second layer 7 on the side facing the substructure 2 and the third layer 8 on the side facing the roof structure and/or the ground 4.

The second and/or third layer 7, 8 is/are made of elastomer, in particular silicone.

Optionally, an aluminum foil can be laminated as a second and/or third layer 7, 8 on at least one side of the layer 6.

It is also conceivable that the fire protection film 5 comprises an additional layer of aluminum. The additional layer of aluminum can be laminated onto the second layer 7 or the third layer 8, for example.

The second and third layers 7, 8 can improve the weather resistance and service life of the fire protection film 5.

The roof structure 11 preferably comprises a liquid-tight top layer 14 and/or the ground 4, in particular made of plastic, bitumen or metal. For example, the top layer 14 and/or the ground 4 may comprise or be formed from TPO (thermoplastic polyolefin), PVC (polyvinyl chloride), FPO (flexible polyolefins), EVA (ethylene-vinyl acetate copolymer) and/or ECB (ethylene copolymerized bitumen).

The top layer 14 can be configured as a liquid-tight film 18 made of plastic.

The fire protection film 5 can be bonded to the underlying cover layer 14, in particular by means of the silicone-based adhesive 9.

Under the top layer 14 or the ground 4 there is optionally a further layer 15 comprising glass fiber, for example a glass fleece and/or a glass fiber fabric, which forms a separation between the top layer 14 and a preferably underlying insulation 16, for example of insulation boards made of rigid foam, in particular of extruded rigid polystyrene foam (XPS), rigid polyisocyanurate foam (PIR) or expanded polystyrene (EPS) or polyurethane.

The insulation 16 can rest on a roof structure, for example a trapezoidal sheet 17.

This construction allows the substructure 2 to rest loosely, in particular directly, on the fire protection film 5. In this way, no fastening means is required that penetrates or engages with the fire protection film 5 and/or the top layer 14.

In the design example shown in Fig. 4, the roof structure is aligned horizontally. It is of course also possible to use the roof structure 11 on inclined roof surfaces. In addition, the roof structure 11 or the roof construction can comprise further layers.

The invention is defined by the features specified in the appended claims.

### List of reference symbols:

| | | | |
|---|---|---|---|
| 1 | Photovoltaic arrangement | 10 | Adhesive point |
| 2 | Substructure | 11 | Roof structure |
| 3 | Photovoltaic module | 12 | Strut |
| 4 | Ground | 13 | Weight |
| 5 | Fire protection film | 14 | Top layer |
| 6 | Layer | 15 | Further layer |
| 7 | Second layer | 16 | Insulation |
| 8 | Third layer | 17 | Trapezoidal sheet |
| 9 | Adhesive | 18 | Film |

## Claims

1. Photovoltaic arrangement (1) with a substructure (2) for fixing at least one photovoltaic module (3) and with a fire protection film (5), wherein the substructure (2) is arranged, set up and/or supported on the fire protection film (5),
**characterized in that**
the fire protection film (5) comprises a layer (6) of a glass fiber fabric and a second layer (7) of plastic, wherein the second layer (7) is formed from silicone..

2. Photovoltaic arrangement (1) according to claim 1, wherein silicone is solvent-free silicone.

3. Photovoltaic arrangement (1) according to claim 1 or 2, wherein the fire protection film (5) comprises a third layer (8), wherein the layer (6) of glass fiber fabric is arranged between the second and the third layer (7, 8).

4. Photovoltaic arrangement (1) according to claim 3, wherein the third layer (8) comprises plastic and/or aluminum, preferably wherein the third layer (8) is formed from, in particular solvent-free, silicone.

5. Photovoltaic arrangement (1) according to one of the preceding claims, wherein the glass fiber fabric comprises a thickness of more than 0.1 mm, preferably of more than 0.2 mm, more preferably of more than 0.25 mm, and/or of less than 1.5 mm, preferably of less than 1.0 mm, more preferably of less than 0.95 mm, and/or of 0.3 mm to 0.9 mm.

6. Photovoltaic arrangement (1) according to one of the preceding claims, wherein the glass fiber fabric comprises a basis weight of more than 50 g/m², preferably of more than 60 g/m², more preferably of more than 80 g/m², and/or of less than 900 g/m², preferably of less than 800 g/m², more preferably of less than 700 g/m², and/or of 100 g/m² to 660 g/m².

7. Photovoltaic arrangement (1) according to one of the preceding claims, wherein the photovoltaic arrangement (1) comprises a ground (4) on which the substructure (2) is arranged, wherein the fire protection film (5) is arranged between the ground (4) and the substructure (2).

8. Photovoltaic arrangement (1) according to claim 7, wherein the fire protection film (5) is bonded to the ground (4) by means of an, in particular silicone-based, adhesive (9).

9. Photovoltaic arrangement (1) according to claim 7 or 8, wherein the fire protection film (5) is bonded at points to the ground (4), in particular with a pattern of adhesive dots (10), in particular consisting of rows and columns, wherein the adhesive dots (10) form the pattern, in particular along a row and/or column, are spaced less than 1 m, preferably less than 0.75 m, further preferably less than 0.6 m, and/or more than 0.2 m, preferably more than 0.3 m, further preferably more than 0.4 m, and/or at least substantially 0.5 m apart.

10. Photovoltaic arrangement (1) according to one of claims 7 to 9, wherein the ground (4) comprises or is formed by a roof, in particular a flat roof and/or a saddle roof with an inclination of less than 25 %, preferably less than 15 °, more preferably less than 10 °, and/or of at least essentially 8 °, and/or between 0 ° and 8 °, and/or a liquid-tight film (18) made of plastic.

11. Use of a fire protection film (5) with a layer (6) of a glass fiber fabric as a fire protection layer, on which a substructure (2) for fixing at least one photovoltaic module (3) is arranged, set up and/or supported, wherein the fire protection film (5) comprises a second layer (7) of plastic, wherein the second layer (7) is formed from silicone.

12. Use according to claim 11, wherein the silicone is solvent-free silicone.

13. Use according to claim 11 or 12, wherein the fire protection film (5) comprises a third layer (7), wherein the layer (6) of glass fiber fabric is arranged between the second and the third layer (7, 8), preferably wherein the third layer (8) comprises plastic and/or aluminum, further preferably wherein the third layer (8) is formed from, in particular solvent-free, silicone.

14. Use according to one of claims 11 to 13, wherein the fire protection film (5) is arranged between a ground (4), in particular a roof and/or a liquid-tight film (18) made of plastic, and the substructure (2).

15. Use according to claim 14, wherein the fire protection film (5) is or becomes bonded to the ground (4) by means of a, in particular silicone-based, adhesive (9), and/or
wherein the fire protection film (5) is bonded at points to the ground (4), preferably with a pattern of bonding points (10), in particular consisting of rows and columns, preferably wherein the bonding points (10) of the pattern, in particular along a row and/or column, are spaced less than 1 m, preferably less than 0.75 m, and/or more than 0.2 m, preferably more than 0.4 m, and/or at least substantially 0.5 m apart.

## Patentansprüche

1. Photovoltaikanordnung (1) mit einer Unterkonstruktion (2) zur Befestigung mindestens eines Photovoltaikmoduls (3) und mit einer Brandschutzfolie (5), wobei die Unterkonstruktion (2) auf der Brandschutzfolie (5) angeordnet, aufgestellt und/oder abgestützt ist,
**dadurch gekennzeichnet, dass**
die Brandschutzfolie (5) eine Schicht (6) aus einem Glasfasergewebe und eine zweite Schicht (7) aus Kunststoff aufweist, wobei die zweite Schicht (7) aus Silikon hergestellt ist.

2. Photovoltaikanordnung (1) nach Anspruch 1, wobei das Silikon lösungsmittelfreies Silikon ist.

3. Photovoltaikanordnung (1) nach Anspruch 1 oder 2, wobei die Brandschutzfolie (5) eine dritte Schicht (8) aufweist, wobei die Schicht (6) aus Glasfasergewebe zwischen der zweiten und der dritten Schicht (7, 8) angeordnet ist.

4. Photovoltaikanordnung (1) nach Anspruch 3, wobei die dritte Schicht (8) Kunststoff und/oder Aluminium aufweist, vorzugsweise wobei die dritte Schicht (8) aus, insbesondere lösungsmittelfreiem, Silikon hergestellt ist.

5. Photovoltaikanordnung (1) nach einem der voranstehenden Ansprüche, wobei das Glasfasergewebe eine Dicke von mehr als 0,1 mm, vorzugsweise von mehr als 0,2 mm, weiter vorugsweise von mehr als 0,25 mm, und/oder von weniger als 1,5 mm, vorzugsweise von weniger als 1,0 mm, weiter vorzugsweise von weniger als 0,95 mm, und/oder von 0,3 mm bis 0,9 mm aufweist.

6. Photovoltaikanordnung (1) nach einem der voranstehenden Ansprüche, wobei das Glasfasergewebe ein Flächengewicht von mehr als 50 g/m², vorzugsweise von mehr als 60 g/m², weiter vorzugsweise von mehr als 80 g/m², und/oder von weniger als 900 g/m², vorzugsweise von weniger als 800 g/m², weiter vorzugsweise von weniger als 700 g/m², und/oder von 100 g/m² bis 660 g/m² aufweist.

7. Photovoltaikanordnung (1) nach einem der voranstehenden Ansprüche, wobei die Photovoltaikanordnung (1) einen Boden (4) aufweist, auf dem die Unterkonstruktion (2) angeordnet ist, wobei die Brandschutzfolie (5) zwischen dem Boden (4) und der Unterkonstruktion (2) angeordnet ist.

8. Photovoltaikanordnung (1) nach Anspruch 7, wobei die Brandschutzfolie (5) mittels eines Klebstoffs (9), insbesondere auf Silikonbasis, mit dem Boden (4) verklebt ist.

9. Photovoltaikanordnung (1) nach Anspruch 7 oder 8, wobei die Brandschutzfolie (5) punktuell mit dem Boden (4) verklebt ist, insbesondere mit einem Muster von Klebstoffpunkten (10), insbesondere bestehend aus Zeilen und Spalten, wobei die das Muster bildenden Klebstoffpunkte (10), insbesondere entlang einer Zeile und/oder Spalte, weniger als 1 m, vorzugsweise weniger als 0,75 m, weiter vorzugsweise weniger als 0,6 m, und/oder mehr als 0,2 m, vorzugsweise mehr als 0,3 m, weiter vorzugsweise mehr als 0,4 m, und/oder zumindest im Wesentlichen 0,5 m voneinander beabstandet sind.

10. Photovoltaikanordnung (1) nach einem der Ansprüche 7 bis 9, wobei der Boden (4) ein Dach, insbesondere ein Flachdach und/oder ein Satteldach mit einer Neigung von weniger als 25 %, vorzugsweise weniger als 15 °, weiter vorzugsweise weniger als 10 °, und/oder von zumindest im Wesentlichen 8 °, und/oder zwischen 0 ° und 8 °, und/oder eine flüssigkeitsdichte Folie (18) aus Kunststoff aufweist oder daraus gebildet ist.

11. Verwendung einer Brandschutzfolie (5) mit einer Schicht (6) aus einem Glasfasergewebe als Brandschutzschicht, auf der eine Unterkonstruktion (2) zur Befestigung mindestens eines Photovoltaikmoduls (3) angeordnet, aufgestellt und/oder abgestützt ist, wobei die Brandschutzfolie (5) eine zweite Schicht (7) aus Kunststoff umfasst, wobei die zweite Schicht (7) aus Silikon hergestellt ist.

12. Verwendung nach Anspruch 11, wobei das Silikon lösungsmittelfreies Silikon ist.

13. Verwendung nach Anspruch 11 oder 12, wobei die Brandschutzfolie (5) eine dritte Schicht (7) umfasst, wobei die Schicht (6) aus Glasfasergewebe zwischen der zweiten und der dritten Schicht (7, 8) angeordnet ist, vorzugsweise wobei die dritte Schicht (8) Kunststoff und/oder Aluminium aufweist, weiter vorzugsweise wobei die dritte Schicht (8) aus, insbesondere lösungsmittelfreiem, Silikon gebildet ist.

14. Verwendung nach einem der Ansprüche 11 bis 13, wobei die Brandschutzfolie (5) zwischen einem Boden (4), insbesondere einem Dach und/oder einer flüssigkeitsdichten Folie (18) aus Kunststoff, und der Unterkonstruktion (2) angeordnet ist.

15. Verwendung nach Anspruch 14, wobei die Brandschutzfolie (5) mittels eines Klebstoffs (9), insbesondere auf Silikonbasis, mit dem Boden (4) verklebt ist oder wird, und/oder
wobei die Brandschutzfolie (5) punktuell mit dem Boden (4) verklebt ist, vorzugsweise mit einem Muster von Klebstoffpunkten (10), insbesondere bestehend aus Zeilen und Spalten, vorzugsweise wobei die Klebstoffpunkte (10) des Musters, insbesondere entlang einer Zeile und/oder Spalte, weniger als 1 m, vorzugsweise weniger als 0,75 m, und/oder mehr als 0,2 m, vorzugsweise mehr als 0,4 m, und/oder zumindest im Wesentlichen 0,5 m voneinander beabstandet sind.

## Revendications

1. Agencement photovoltaïque (1) comprenant une sous-structure (2) pour la fixation d'au moins un module photovoltaïque (3) et comprenant une feuille de protection contre l'incendie (5), la sous-structure (2) étant disposée, posée et/ou supportée sur la feuille de protection contre l'incendie (5),
**caractérisé en ce que**
la feuille de protection contre l'incendie (5) comprend une couche (6) en un tissu de fibres de verre et une deuxième couche (7) en matière plastique, la deuxième couche (7) étant formée de silicone.

2. Agencement photovoltaïque (1) selon la revendication 1, dans lequel le silicone est un silicone sans solvant.

3. Agencement photovoltaïque (1) selon la revendication 1 ou 2, dans lequel la feuille de protection contre l'incendie (5) comprend une troisième couche (8), la couche (6) en tissu de fibres de verre étant disposée entre la deuxième et la troisième couche (7, 8).

4. Agencement photovoltaïque (1) selon la revendication 3, dans lequel la troisième couche (8) comprend une matière plastique et/ou de l'aluminium, de préférence dans lequel la troisième couche (8) est formée de silicone, en particulier sans solvant.

5. Agencement photovoltaïque (1) selon l'une quelconque des revendications précédentes, dans lequel le tissu de fibres de verre a une épaisseur supérieure à 0,1 mm, de préférence supérieure à 0,2 mm, plus préférablement supérieure à 0,25 mm, et/ou inférieure à 1,5 mm, de préférence inférieure à 1,0 mm, plus préférablement inférieure à 0,95 mm, et/ou de 0,3 mm à 0,9 mm.

6. Agencement photovoltaïque (1) selon l'une quelconque des revendications précédentes, dans lequel le tissu de fibres de verre a un grammage supérieur à 50 g/m² , de préférence supérieur à 60 g/m² , plus préférablement supérieur à 80 g/m² , et/ou inférieur à 900 g/m² , de préférence inférieur à 800 g/m² , plus préférablement inférieur à 700 g/m² , et/ou de 100 g/m² à 660 g/m² .

7. Agencement photovoltaïque (1) selon l'une quelconque des revendications précédentes, dans lequel l'agencement photovoltaïque (1) comprend un fond (4) sur lequel la sous-structure (2) est disposée, la feuille de protection contre l'incendie (5) étant disposée entre le fond (4) et la sous-structure (2).

8. Agencement photovoltaïque (1) selon la revendication 7, dans lequel la feuille de protection contre l'incendie (5) est collée au fond (4) au moyen d'un adhésif (9), en particulier à base de silicone.

9. Agencement photovoltaïque (1) selon la revendication 7 ou 8, dans lequel la feuille de protection contre l'incendie (5) est collée ponctuellement au fond (4), en particulier avec un motif de points d'adhésif (10), en particulier constitué de lignes et de colonnes, les points d'adhésif (10) formant le motif, en particulier le long d'une ligne et/ou d'une colonne, étant espacés les uns des autres de moins de 1 m, de préférence de moins de 0,75 m, plus préférablement de moins de 0,6 m, et/ou de plus de 0,2 m, de préférence de plus de 0,3 m, plus préférablement de plus de 0,4 m, et/ou au moins sensiblement de 0,5 m.

10. Agencement photovoltaïque (1) selon l'une quelconque des revendications 7 à 9, dans lequel le fond (4) comprend un toit, en particulier un toit plat et/ou un toit à selle avec une inclinaison inférieure à 25 %, de préférence inférieure à 15 °, plus préférablement inférieure à 10 °, et/ou d'au moins sensiblement 8 °, et/ou entre 0 ° et 8 °, et/ou une feuille étanche aux liquides (18) en matière plastique ou est formé à partir de celle-ci.

11. Utilisation d'une feuille de protection contre l'incendie (5) comprenant une couche (6) en un tissu de fibres de verre en tant que couche de protection contre l'incendie, sur laquelle une sous-structure (2) pour la fixation d'au moins un module photovoltaïque (3) est disposée, posée et/ou supportée, la feuille de protection contre l'incendie (5) comprenant une deuxième couche (7) en matière plastique, la deuxième couche (7) étant formée de silicone.

12. Utilisation selon la revendication 11, dans laquelle le silicone est un silicone sans solvant.

13. Utilisation selon la revendication 11 ou 12, dans laquelle la feuille de protection contre l'incendie (5) comprend une troisième couche (7), la couche (6) en tissu de fibres de verre étant disposée entre la deuxième et la troisième couche (7, 8), de préférence dans laquelle la troisième couche (8) comprend une matière plastique et/ou de l'aluminium, de préférence encore dans laquelle la troisième couche (8) est formée de silicone, en particulier sans solvant.

14. Utilisation selon l'une quelconque des revendications 11 à 13, dans laquelle la feuille de protection contre l'incendie (5) est disposée entre un fond (4), en particulier un toit et/ou une feuille étanche aux liquides (18) en matière plastique, et la sous-structure (2).

15. Utilisation selon la revendication 14, dans laquelle la feuille de protection contre l'incendie (5) est ou est collée au fond (4) au moyen d'un adhésif (9), en particulier à base de silicone, et/ou
dans laquelle la feuille de protection contre l'incendie (5) est collée ponctuellement au fond (4), de préférence avec un motif de points d'adhésif (10), en particulier constitué de lignes et de colonnes, les points d'adhésif (10) du motif, en particulier le long d'une ligne et/ou d'une colonne, étant espacés les uns des autres de moins de 1 m, de préférence de moins de 0,75 m, et/ou de plus de 0,2 m, de préférence de plus de 0,4 m, et/ou au moins sensiblement de 0,5 m.
